# EUROPEAN PATENT SPECIFICATION

(11) **EP 3 730 337 B1**
(45) Date of publication and mention of the grant of the patent: **14.12.2022**
(21) Application number: 20151983.2
(22) Date of filing: 15.01.2020
(51) Int. Cl.: B60L 7/18

(54) **TWO-WHEELED VEHICLE WITH VIRTUAL BRAKING AND VIRTUAL CLUTCH**
ZWEIRADFAHRZEUG MIT VIRTUELLER BREMSE UND VIRTUELLER KUPPLUNG
VÉHICULE À DEUX ROUES AVEC FREINAGE VIRTUEL ET EMBRAYAGE VIRTUEL

(30) Priority: 16.01.2019 US 201962793127 P
(43) Date of publication of application: 28.10.2020
(73) Proprietor: Harley-Davidson Motor Company Group, LLC, Milwaukee, WI 53208 (US)
(72) Inventor: KNITT, Andrew Alfred, Oconomowoc, WI 53066 (US); REITINGER, Samuel Nicholas, Wauwatosa, WI 53225 (US); WILLIAMS, James Joseph, Waterford, WI 53185 (US); SADAUCKAS, James, Driggs, ID 83422 (US)
(74) Representative: Grünecker Patent- und Rechtsanwälte PartG mbB

(56) References cited:
- EP-A1- 2 910 401
- EP-A1- 2 910 402
- EP-A1- 3 401 201
- EP-A2- 2 383 865
- US-A1- 2014 172 209
- US-A1- 2015 222 208
- US-A1- 2017 036 547

## Description

### RELATED APPLICATIONS

This application claims priority to U.S. Provisional Application No. 62/793,127, filed January 16, 2019.

### FIELD

Embodiments described herein relate to vehicles and, more particularly, relate to two-wheeled vehicles that use an electric powertrain with a regenerative braking system to supplement or replace a mechanical, frictional brake, such as a hydraulic brake, to simulate a clutch, or a combination thereof. Accordingly, embodiments described herein can provide a virtual brake or clutch that simulates a mechanical brake or clutch.

US 2014 / 172209 A1 discloses a drive control system for an electric motor, which includes a slippage determination device, a tentative vibration damper torque calculator, a vibration damper torque limit value setting device, a vibration damper torque setting device, and a control device. The vibration damper torque setting device is configured to set a control torque obtained by limiting a tentative vibration damper torque using a limit value set by the vibration damper torque limit value setting device. The control device is configured to control driving of the electric motor in accordance with a command value of a torque obtained by combining a requested torque for the electric motor with the control torque set by the vibration damper torque setting device.

EP 2 910 402 A1 discloses a regenerative brake control system of an electric motorcycle, which includes an electric motor, a regeneration adjustment lever, sensors for detecting vehicle states, respectively, and a control unit for settin reference gregenerative torque according to the vehicle state. The control unit calculates target torque obtained by compensating the reference regenerative torque based on the detected value of a regeneration amount sensor, which detects the operation amount of a regeneration adjustment lever and controls the electric motor such that the electric motor generates regenerative torque.

### SUMMARY

Mechanical, frictional brakes, such as hydraulic brakes, add cost and weight, which can impact the performance of a vehicle, especially electric vehicles, such as electric motorcycles. Furthermore, mechanical, frictional brakes dissipate kinetic energy, which otherwise could be used to charge an electric power store included in the vehicle, which may otherwise limit the range and operation of an electric vehicle. Mechanical clutches similarly add cost and weight to a two-wheeled vehicle.

Accordingly, it is an object of the present invention to provide methods and systems for regeneratively braking at least one wheel of a vehicle. This object is achieved by the present invention as claimed in the independent claims. Advantageous and preferred embodiments of the present invention are defined by the dependent claims.

Other features and aspects of the invention will become apparent by consideration of the following detailed description and accompanying drawings.

### BRIEF DESCRIPTION OF THE DRAWINGS

FIG. 1 is a perspective view of a two-wheeled vehicle according to one embodiment.

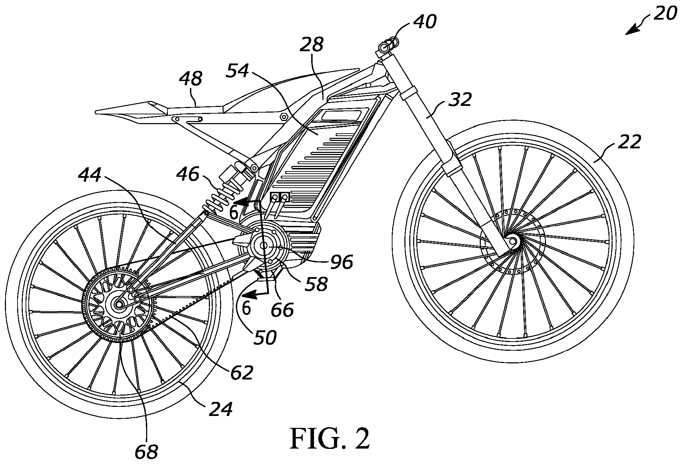

FIG. 2 is a right side view of the two-wheeled vehicle of FIG. 1.

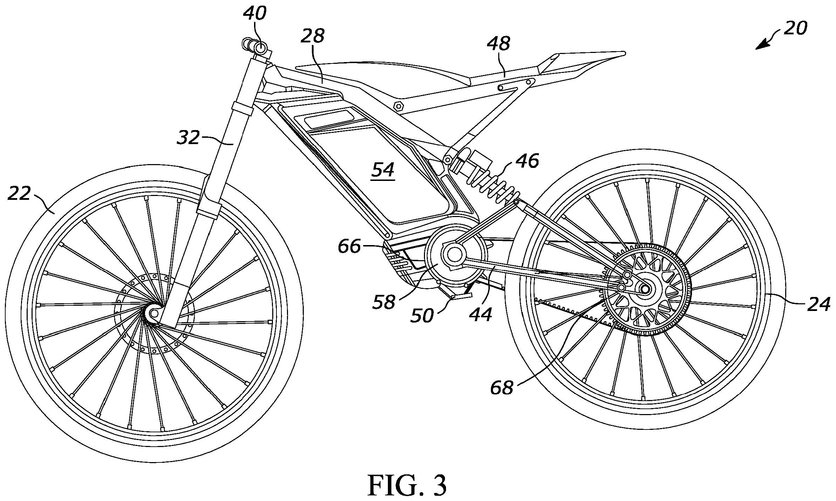

FIG. 3 is a left side view of the two-wheeled vehicle of FIG. 1.
FIG. 4 illustrates the two-wheeled vehicle of FIG. 1 including a twist grip and a regenerative brake control according one embodiment.
FIG. 5 is a flow chart illustrating a method of operating an electric motor of the two-wheeled vehicle of FIG. 1 according to one embodiment.
FIG. 6 schematically illustrates input processing for generating a requested torque based on a position of the regenerative braking control included in the two-wheeled vehicle of FIG. 1 according to one embodiment.
FIG. 7 schematically illustrates a diagram for generating a virtual braking and a virtual clutch in the two-wheeled vehicle of FIG. 1 according to one embodiment.

### DETAILED DESCRIPTION

One or more embodiments are described in the following description and illustrated in the accompanying drawings. These embodiments are not limited to the specific details provided herein and may be modified in various ways. Furthermore, other embodiments may exist that are not described herein. Also, the functionality described herein as being performed by one component may be performed by multiple components in a distributed manner. Likewise, functionality described herein as being performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed. Furthermore, some embodiments described herein may include one or more electronic processors configured to perform the described functionality (or portions thereof) by executing instructions stored in non-transitory, computer-readable medium. Similarly, embodiments described herein may be implemented as non-transitory, computer-readable medium storing instructions executable by one or more electronic processors to perform the described functionality. As used in the present application, "non-transitory, computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

The terms "connected" and "coupled" are used broadly and encompass both direct and indirect connecting and coupling. Further, "connected" and "coupled" are not restricted to physical or mechanical connections or couplings and can include electrical connections or couplings, whether direct or indirect. In addition, electronic communications and notifications may be performed using wired connections, wireless connections, or a combination thereof and may be transmitted directly or through one or more intermediary devices over various types of networks, communication channels, and connections. Moreover, relational terms such as first and second, top and bottom, and the like may be used herein solely to distinguish one entity or action from another entity or action without necessarily requiring or implying any actual such relationship or order between such entities or actions.

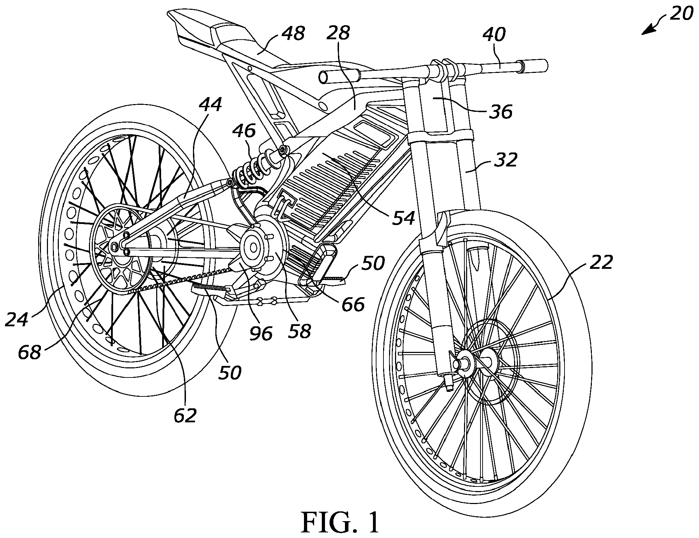

FIG. 1 illustrates a two-wheeled vehicle 20 according to one embodiment. It should be understood the systems and methods described herein may be applicable to any kind of two-wheeled vehicle (for example, a motorcycle, a moped, an electric bike, and the like). The two-wheeled vehicle 20 includes front and rear wheels 22, 24 (e.g., a single front wheel 22 and a single rear wheel 24 aligned with the front wheel 22 to define a single track). The vehicle 20 includes a frame structure having a main frame 28. A front fork 32 supports the front wheel 22 ahead of the main frame 28. The front fork 32 is rotatably coupled to a head tube 36 of the main frame 28. Handlebars 40 are coupled to the front fork 32 to allow a rider to control the orientation of the front fork 32 and the front wheel 22. A rear swingarm 44 supports the rear wheel 24 for rotation therein. The rear swingarm 44 enables pivoting suspension movements of the rear wheel 24 and the swingarm 44 together relative to the main frame 28 about an axis A. In addition to the pivoting support at the axis A, the swingarm 44 is coupled to the main frame 28 through a shock absorber unit 46 (e.g., including a coil spring and a hydraulic damper). The vehicle 20 further includes at least one seat 48 (e.g., saddle seat(s) for operator and optionally pillion passenger) and at least one set of foot supports 50 (e.g., laterally extending foot pegs).

As illustrated, the vehicle 20 is an electric motorcycle driven by an electric powertrain including an electric power store 54 (e.g., a battery pack) and an electric motor 58 electrically coupled to the electric power store 54 to convert stored electrical energy from the electric power store 54 into rotational kinetic energy for driving the vehicle 20. As illustrated, the electric motor 58 powers the rear wheel 24 through an endless drive member 62 (e.g., belt or chain) in the form of a loop wrapped around a drive sprocket 66 and a driven sprocket 68 that is fixedly secured to the rear wheel 24. The drive sprocket 66 that drives the endless drive member 62 is fixed to rotate integrally with an output shaft of the electric motor 58 about an axis A. As such, the vehicle 20 is provided without a multi-speed transmission between the electric motor 58 and the drive sprocket 66, and without any gearbox whatsoever. In some embodiments, the electric motor 58 includes a high pole count motor having high torque density.

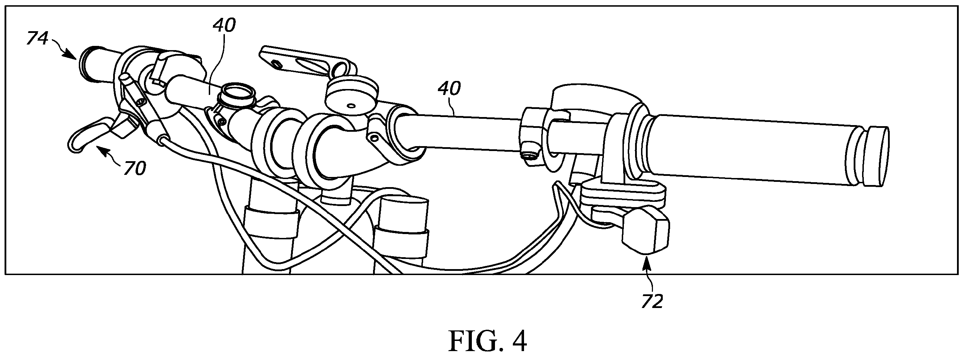

The vehicle 20 uses regenerative braking to brake one or both of the wheels 22, 24. In particular, the vehicle 20 uses regenerative capabilities of the electric motor 58 to supplement or replace a mechanical, frictional brake (e.g., a hydraulic brake) for one or both of the wheels 22, 24. For example, as illustrated in FIG. 4, the handlebar 40 of the vehicle 20 includes a braking control for each wheel 22, 24. In particular, as illustrated, the vehicle 20 includes a traditional front brake lever 70 on the right side of the handlebar 40 for controlling braking of the front wheel 22 (via a mechanical, frictional brake, such as a hydraulic brake) and includes a control 72 on the left side of the handlebar 40 for controlling regenerative braking of the rear wheel 24. As described below, in some embodiments, the control 72 operates as a regenerative brake control wherein the operator of the vehicle 20 uses the control 72 to request varying amounts of negative torque from the electric powertrain, which then applies the requested torque to stop or slow the vehicle 20 (i.e., stop or slow the rear wheel 24). During braking of the rear wheel 24, braking energy is captured back into the electric power store 54 rather than being dissipated as heat through application of a mechanical, frictional brake (e.g., brake caliper/rotor friction). Thus, in some embodiments, no mechanical, frictional brake is installed for the rear wheel 24, which reduces the cost, weight, and complexity of the vehicle 20. For example, in some embodiments, the electric powertrain provides at least the same amount of, if not more, braking force than a traditional hydraulic brake installed on motorcycles and avoids the cost and weight associated with a more upgraded mechanical braking system, such as an upgraded hydraulic brake.

As illustrated in FIG. 4, in some embodiments, the control 72 includes a pivotable (pivoting) lever that an operator pulls toward the handlebar 40 to brake the rear wheel 24. An amount or degree that the lever is pulled or pivoted equates to an amount of braking requested by the operator. Thus, in some embodiments, the control 72 allows the operator to continuously vary the amount of regenerative brake based on how much the operator pulls the lever toward the handlebar 40. When the operator does not pull on the lever, the lever is biased (using a spring or similar biasing member) to a home position where no braking is requested of the rear wheel 24 through the control 72. It should be understood that, in some embodiments, the control 72 may include a different type of actuator than a pivoting lever illustrated in FIG. 4. Furthermore, in some embodiments, the control 72 may be positioned at other locations on the vehicle 20 than the handlebar 40. For example, in some embodiments, the control 72 includes a foot pedal instead of the hand-actuator lever illustrated in FIG. 4.

The amount of regenerative braking applied to the rear wheel 24 may be controlled based on a combination of inputs, including an input received through the control 72 as well as an input received through a rotational twist grip also coupled to the handlebar 40. For example, as illustrated in FIG. 4, the vehicle 20 includes a twist grip 74 that is rotatable through a plurality of positions. A twist grip sensor, also included in the vehicle 20, is configured to detect a position of the twist grip 74, such as via a Hall Effect sensor, a rotary encoder, or the like. Although the twist grip 74 is illustrated in FIG. 4 as being positioned on the right side of the handlebar 40, in other embodiments, the twist grip 74 may be positioned on the left side of the handlebar 40. Also, in some embodiments, a different type of actuator (e.g., a pedal, a pivoting lever, or the like) may be used in place of the rotatable twist grip 74 as illustrated to receive input from the operator regarding a requested driving torque for the vehicle 20 (i.e., the rear wheel 24). Such actuators may be generally referred to herein as drive torque controls.

The detected position of the twist grip 74 is mapped to a requested driving torque. In some embodiments, the mapping between the current position of the twist grip 74 and the associated torque request may also be based on a current speed of the vehicle 20, which may be determined based on an operating parameter of the electric motor 58, such as revolutions per minute (RPM). For example, in some embodiments, a two-dimensional look-up table may be used to map a current twist grip position and a current speed to a requested driving torque.

Also, in some embodiments, the vehicle 20 can be operated in one of a plurality of ride modes, which can be selected manually by the operator, selected automatically based on operating conditions of the vehicle 20, or both. Each ride mode may provide different operation of the vehicle 20, such as by providing maximum speed or acceleration, providing efficient energy usage, or the like. Accordingly, in these embodiments, a specific two-dimensional table for the currently-activated ride mode may be used to map a position of the twist grip 74 and a current speed to a requested driving torque.

Independent of the torque request determined based on the position of the twist grip 74, a second (negative) torque request is generated based on a positon of the control 72. This mapping may be performed using an equation or a one-dimensional look-up table. For example, like the twist grip 74, a position of the control 72 is detected by a control sensor (e.g., including an optical sensor, a mechanical sensor, an electrical sensor, or the like) and the detected position is mapped to a requested braking torque. In some embodiments, when an equation is used to perform the mapping, the equation may include determining a percentage of activation of the control 72, such as by dividing a detected position of the control 72 by a predetermined maximum position. In such embodiments, the percentage of activation of the control 72 can be multiplied by a maximum amount of regenerative braking torque available to calculate a requested braking torque (N/m). In some embodiments, the maximum position of the control 72, the maximum available braking torque, or both may be defined in memory or software to allow the activation of the control 72 to be configured for different motorcycles, operators, driving conditions, or the like. In some embodiments, the requested regenerative braking torque defined by the position of the control 72 may vary based on the currently-selected ride mode similar to the twist grip 74 as described above. However, in other embodiments, the amount of regenerative braking requested via the control 72 remains the same regardless of the currently-selected ride mode.

In some embodiments, the requested driving torque defined by the position (rotation) of the twist grip 74 is summed with the requested braking torque defined by the position of the control 72 to determine a torque command for the electric motor 58, which is transmitted to a motor controller for the electric motor 58. Thus, the generated torque command represents a blended command accounting for any amount of driving torque requested by the operator via the twist grip 74 as well as any amount of braking torque requested by the operator via the control 72. When the torque command is negative, the electric motor 58 regenerative brakes the rear wheel 24 and energy captured during the regenerative braking may be stored in the power store 54. When the torque command is positive, the electric motor 58 drives the rear wheel 24 to propel the vehicle 20 forward. However, the amount of driving torque represented by the torque command may be less than a previous torque command, which may similarly result in a slowdown (deceleration) of the vehicle 20 even though the torque command is positive.

In some embodiments, torque limits may be applied to the summed torque value or the individual torque values included in the sum before transmitting a torque command based on the sum to the motor controller, such as to keep the torque command transmitted to the motor controller within operating limits of the electric powertrain, to provide advanced braking functionality, such as traction control or anti-lock braking, or the like. In other embodiments, the motor controller or other components included the vehicle 20 may further process the torque request before the torque request is implemented via the electric motor 58.

The requested driving torque defined by the position of the twist grip 74 can be positive or negative. In other words, this torque request can request traction power or regenerative braking. For example, the torque request defined by a position of the twist grip 74 may include a negative torque (regenerative braking) to provide a coast down of the vehicle 20. Accordingly, as used in the present application, the "requested driving torque" (defined based on the position of the twist grip 74) can be positive or negative. However, any negative torque requested based on the position of the twist grip 74 is independent of and in addition to any regenerative braking control (negative torque) requested via the control 72.

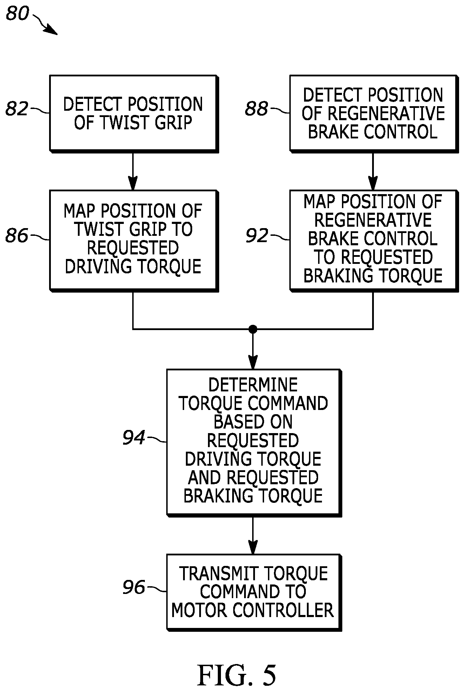

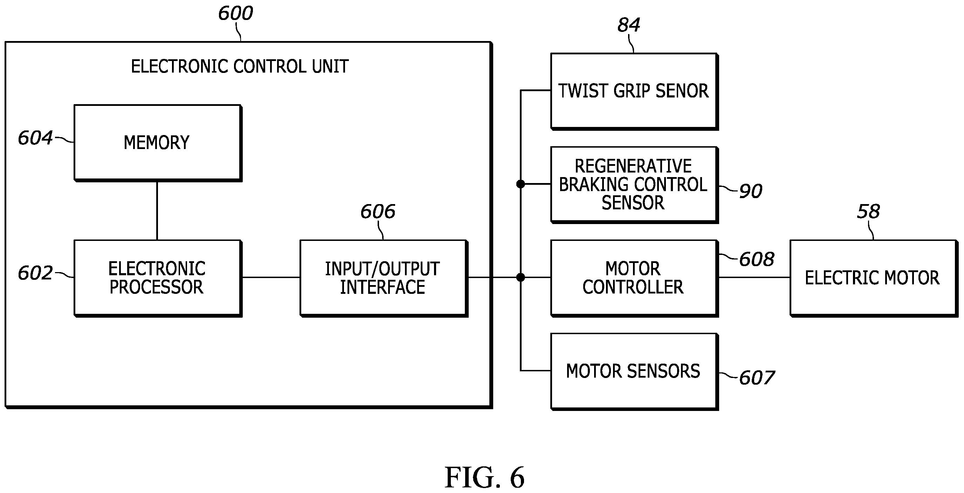

FIG. 5 is a flowchart illustrating a method 80 of generating a virtual brake for the electric motor 58 of the vehicle 20 according to one embodiment, such as a regenerative braking torque. The method 80 is performed by an electronic control unit (ECU) included in the motorcycle (for example, the ECU 600 of FIG. 6). As illustrated in FIG. 6, the ECU 600 may include an electronic processor 602, such as a microprocessor, an application-specific integrated circuit, or the like. In some embodiments, the ECU 600 also includes non-transitory, computer-readable memory 604, such as for storing limits or other predetermined parameters for the regenerative braking, mappings or tables, or the like. The ECU 600 also includes an input/output interface 606 for communicating with other components included in the vehicle 20 over one or more wired or wireless communication channels or networks. For example, the ECU 600 may be configured to receive data from a twist grip sensor 84, a control sensor 90, one or more sensors 607 monitoring operating parameters of the electric motor 58 (e.g., detecting RPM), or the like and may also be configured to transmit data to a motor controller 608 for the electric motor 58, including a torque command. It should be understood that the functionality described herein as being performed by the ECU 600 may be distributed over multiple electronic control units. For example, in some embodiments, other components included in the vehicle 20, such as other ECUs, sensors, or the like, may perform at least a portion of the method 80.

As illustrated in FIG. 5, the method 80 includes detecting a position of the twist grip 74 (at block 82). As described above, a twist grip sensor 84 may be configured to detect the position of the twist grip 74 (from among a plurality of position) using a rotary encoder, a Hall Effect sensor, or the like and output a current position of the twist grip 74, which may represent a value between 0% and 100% of a maximum driving torque available. In some embodiments, redundant sensing assemblies (e.g., sensor assemblies) may be used to ensure proper operation of the twist grip 74 and the twist grip sensor 84. The twist grip sensor 84 may be configured to determine not only a position (604A) of the twist grip 74, but also detect faults or other errors. Also, in some embodiments, the twist grip sensor 84 may apply various checks for faults or other errors. As noted above, the ECU 600 may communicate with the twist grip sensor 84. Accordingly, in some embodiments, the ECU 600 detects the current position of the twist grip 74 based on data received from the twist grip sensor 84.

The method 80 also includes mapping the detected position of the twist grip 74 to a requested driving torque (at block 86). As also described above, the position of twist grip 74 may be mapped to a requested driving torque using a two-dimensional table that maps twist grip position and motorcycle speed (RPM of the electric motor 58) to a requested driving torque. In some embodiments, when the vehicle 20 includes a plurality of ride modes, a requested driving torque may be calculated for each ride mode, and the ECU 600 can select the requested driving torque calculated for the currently-activated ride mode. In other embodiments, the ECU 600 may only calculate the requested driving torque for the currently-activated ride mode.

The method 80 also includes detecting a position of the control 72 (at block 88). As described above, a control sensor 90 may be configured to detect the position of the control 72 (from among a plurality of position) and output a current position of the control 72, which may represent a value between 0% and 100% of a predetermined maximum braking torque available. In some embodiments, the control sensor 90 may apply various checks for faults or other errors. As noted above, the ECU 600 may communicate with the control sensor 90 and, thus, the ECU 600 may detect the current position of the control 72 based on data received from the control sensor 90.

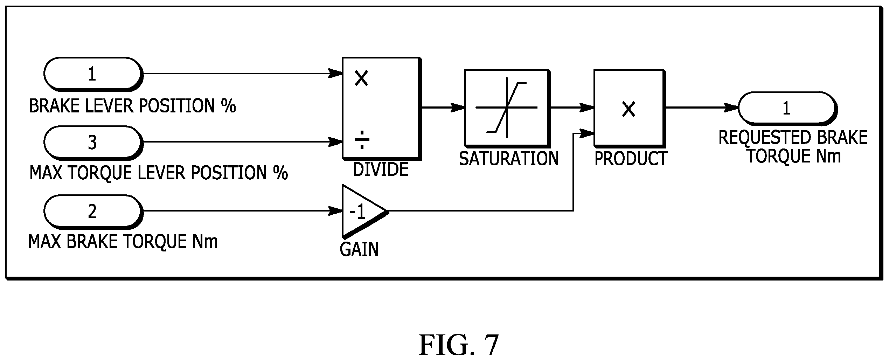

The method 80 also includes mapping a position of the control 72 to a requested braking torque (at block 92). As also described above, the position of the control 72 may be mapped to a requested braking torque using a one-dimensional table or an equation. For example, FIG. 7 schematically illustrates one equation that may be applied by the ECU 600 to perform the mapping. As illustrated in FIG. 7, the ECU 600 divides the current position of the control 72 by a maximum position (stored in memory or software) and multiples the result by a maximum braking torque (in N/m), wherein the result of this multiplication represents the requested braking torque (in N/m). As noted above, the ECU 600 may also perform various checks for faults or other errors.

Returning to FIG. 5, at block 94, the ECU 600 determines a torque command based on the requested driving torque and the requested braking torque. The resulting torque command is then transmitted to the motor controller 608 for the electric motor 58 (at block 96). In some embodiments, the determination of the torque command includes summing the requested driving torque (as defined by the position of the twist grip 74) and the requested braking torque (as defined by the position of the control 72).

In some embodiments, when regenerative braking is used as the sole mechanism to brake a wheel of the motorcycle, additional braking features, such as anti-locking braking systems and traction control, may also implemented in the vehicle 20 using regenerative braking while avoiding the need for heavy and expensive systems for providing such systems (e.g., a hydraulic ABS unit). In addition, through configuration of both the mechanical operation of the control 72 and the mapping of positions of this control 72 to requested braking torques, the regenerative braking can reproduce the functionality and feel of a traditional mechanical, frictional brake, such as a hydraulic rear brake (via the process described herein, which is also referred to herein as providing a virtual brake), which allows the cost, weight, and duplication of a mechanical braking system to be eliminated without sacrificing performance or operator experience. For example, although the control 72 is an electronic control or lever, the biasing forces applied through the control 72 may be configured to provide similar feedback to an operator as if the operator were activating a traditional brake lever. In particular, since traditional brake levers (or pedal) may provide increased resistance the more the lever (or pedal) is actuated, the control 72 can provide similar feedback to the operator. Furthermore, just as an operator could apply a traditional frictional brake (a hydraulic brake) and also activate the twist grip 74 to effectively "drive through" the applied brake, the maximum amount of torque applied through regenerative braking can similarly be configured (through the mapping of control 72 position to braking torque) to be less than a maximum driving torque that can be requested through activation of the twist grip 74.

In some embodiments, the biasing forces applied through the control 72 may be configured to (alternatively or in addition to the "virtual braking," described above) provide feedback to an operator as if the operator were activating a traditional clutch of the vehicle 20 (described herein as providing a virtual clutch). In particular, when a biasing force is applied to the control 72, a torque request (for either of a positive or negative torque amount) may be generated and applied to the electric motor 58 of the motorcycle, wherein the amount of torque included in the request corresponding to a position of the control 72. For example, when the control 72 is fully actuated (for example, fully pulled in when the control 72 is a pivoting lever), the corresponding torque request is 0% and when the control 72 is not actuated (for example, not pulled in when the control 72 is a pivoting lever), the corresponding torque request is 100%. The amount of torque applied may be any percentage between 100% and 0% based on the particular position of the control 72 (the amount in which the control 72 is actuated). In implementing the virtual clutch, the ECU 600 may be configured to, in the determination of the torque command at block 94 of the method 80, multiply the requested driving torque and the requested torque (a percentage corresponding to the position of the control 72) and determine the amount of torque in the torque command based on the resulting product. In other words, application of the control 72 results in reducing the requested torque command (whether it is positive or negative torque) towards zero, with zero torque being requested when the lever is fully pulled in, regardless of any regeneration settings or twist grip 74 position).

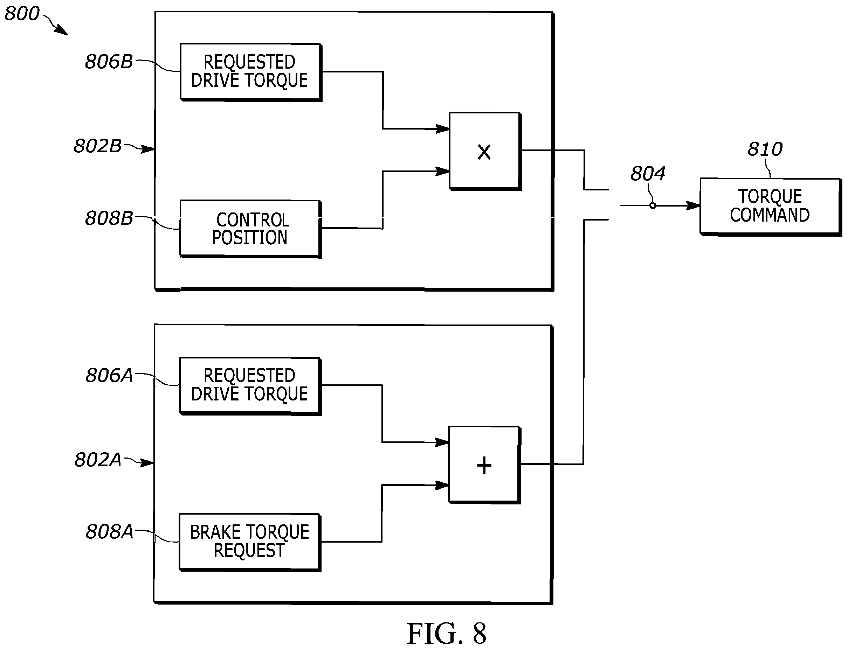

The ECU 600 may be configured to provide either or both of the virtual brake and the virtual clutch. In some embodiments, when only the virtual clutch is provided, the vehicle 20 may include only a purely mechanical braking system. In embodiments where both the virtual brake and the virtual clutch are provided, an operator of the vehicle 20 may select either of the virtual brake or virtual clutchto engage via separate or a common input mechanism (for example, a dial, switch, and the like). For example, FIG. 8 is a diagram 800 illustrating a virtual brake process flow 802A and a virtual clutch process flow 802B. A user of the vehicle 20 may select which process to use via input mechanism 804 (illustrated as a switch). As illustrated in the virtual brake process flow 802A, the driving torque request (requested drive torque 806A) determined at block 86 of method 80 of FIG. 5 is added to the requested torque (brake torque request 808A). In the process of determining the requested torque 808A, in the case of the virtual brake, the ECU 600 determines the requested torque 808A by dividing a position of the control 72 by a maximum twist grip 74 position, the result of which may then be multiplied by a maximum (braking) torque (FIG. 7).

Returning to FIG. 8, the virtual clutch process flow 802B may include multiplying the requested driving torque (requested drive torque 806B) by a position of the control 72 (position 808B). Here, the amount of torque applied according to the torque command 810 is determined independent of the twist grip 74 position.

In some embodiments, as described above, the rear wheel 24 is braked using solely regenerative braking. However, in other embodiments, the rear wheel 24 also includes a mechanical brake, which the operator may activate through activation of a separate actuator on the vehicle 20. For example, in some embodiments, an operator may be able to selectively turn regenerative braking on and off, such as through selection of one or more ride modes. For example, one or more of the ride modes available to an operator may provide regenerative braking while other ride modes may only provide frictional, mechanical braking. Also, in some embodiments, the operator may use the same actuator to apply regenerative braking or mechanical braking and the type of braking applied may be based on the currently selected ride mode, current operating parameters of the vehicle 20, current environmental conditions, or the like. For example, in some embodiments, a control system included in the vehicle 20 may automatically determine whether to apply regenerative braking, mechanical braking, or a combination thereof. Accordingly, in some embodiments, through activation of a single braking control, an operator may specify a requested braking amount, and a control system included in the vehicle 20 may automatically determine what type of braking to apply to satisfy the request (including a combination of braking types in some situations).

Also, the braking described above for the rear wheel 24 may similarly be applied to the front wheel 22. Accordingly, in some embodiments, the vehicle 20 does not include any mechanical, frictional brakes and, rather, uses regenerative braking as the sole mechanism for slowing and stopping the vehicle 20.

In addition, the vehicle 20 described herein is provided as one example of a motorcycle including the disclosed regenerative braking and associated control. The regenerative braking, however, described herein can be used in other motorcycles 20 (and other types of vehicles). For example, in some embodiments, the vehicle 20 is powered by an internal combustion engine (ICE) in place of or in addition to the electric powertrain. In this embodiment, the vehicle 20 including the ICE may use regenerative braking as the sole mechanism for braking both wheels of the vehicle 20 as described above. Alternatively, the vehicle 20 including the ICE may use regenerative braking as the sole mechanism of braking one wheel, such as the rear wheel 24, but may include a mechanical brake, such as a frictional disc brake, to brake the other wheel.

Various features and advantages of the invention are set forth in the following claims.

## Claims

1. A method of operating an electric motor (58) of a vehicle (20), the method comprising:
detecting (82) a position of a first actuator (74) included in the vehicle (20), the first actuator (74) controlling a drive torque of the vehicle;
detecting (84) a position of a second actuator (72) included in the vehicle (20), the second actuator (72) controlling a regenerative braking force of a wheel (22, 24) of the vehicle (20);
mapping (86) the position of the first actuator (74) to a first requested torque;
mapping (88) the position of the second actuator (72) to a second requested torque, the second requested torque represented as a percentage between 0% and 100% based on the position of the second actuator;
determining (94), with an electronic control unit (600), a torque command based on the first requested torque and the second requested torque by multiplying the first requested torque by the second requested torque; and
transmitting (96) the torque command to the electric motor (58) included in the vehicle (20) to regenerative braking the wheel (22, 24), wherein regenerative braking provided via the electric motor (58) based on the torque command is the sole braking mechanism provided for the wheel (22, 24).

2. A system for operating an electric motor (58) of a two-wheeled vehicle (20), the system comprising:
at least one electronic control unit (600) included in the vehicle (20), the at least one electronic control unit (600) configured to:
detect a position of a first actuator (74) included in the vehicle (20), the first actuator (74)-controlling a drive torque of the vehicle,
detect a position of a second actuator (72) included in the vehicle (20), the second actuator (72) controlling a regenerative braking force of a wheel (22, 24) of the vehicle (20),
map the detected position of the first actuator (74) to a first requested torque,
map the position of the second actuator (72) to a second requested torque, the second requested torque represented as a percentage between 0% and 100% based on the position of the second actuator,
determine a torque command based on the first requested torque and the second requested torque by multiplying the first requested torque by the second requested torque, and
transmit the torque command to the electric motor (58) included in the vehicle (20) to regenerative braking the wheel (22, 24), wherein regenerative braking provided via the electric motor (58) based on the torque command is the sole braking mechanism provided for the wheel (22, 24).

3. The system of claim 2, wherein the electronic control unit (600) determines the torque command by summing the first requested torque and the second requested torque.

4. The system of claim 2 or 3, further comprising:
the electric motor (58);
a wheel (22, 24) drivably coupled to the electronic motor (58) to propel the vehicle (20);
the first actuator (74), wherein the first actuator (74) is movable between a first plurality of positions; and
the second actuator (72), wherein the second actuator (72) is movable between a second plurality of positions,
wherein the electronic control unit (600) is configured to determine the position of the first actuator (74) from the first plurality of positions and determine the position of the second actuator (72) from the second plurality of positions, and
wherein the first requested torque is a requested driving torque and the second requested torque is a requested braking torque.

5. The system of claim 4, wherein the wheel (22, 24) includes a rear wheel of the vehicle.

6. The system of claim 4 or 5, further comprising an electric power store (54) powering the electric motor (58), wherein, when the torque command is negative, the electric motor (58) regeneratively brakes the wheel (22,24) and energy captured during the regenerative braking is stored in the electric power store (58).

7. The system of one of claims 2 to 6, wherein the first actuator (74) includes a twist grip positioned on a handlebar (40) of the vehicle (20) positioned on a right side of a handlebar (40) of the vehicle(20).

8. The system of one of claims 2 to 7, wherein the second actuator (72) includes a pivotable lever positioned on a handlebar (40) of the vehicle (20) and/or wherein the second actuator (72) includes a foot pedal and/or wherein the second actuator (72) is positioned on a left side of a handlebar (40) of the vehicle (20).

9. The system of one of claims 2 to 8, wherein the electronic control unit (600) is configured to map the detected position of the first actuator (74) to the first requested torque based on the position of the first actuator (72) and a speed of the vehicle.

10. The system of claim 9, wherein the speed of the vehicle is represented by a revolutions per minute of the electric motor (58).

11. The system of one of claims 2 to 10, wherein the electronic control unit (600) is configured to map the detected position of the first actuator (74) to the first requested torque by accessing a two-dimensional table mapping the position of the first actuator (74) and a speed of the vehicle to the requested driving torque.

12. The system of one of claims 2 to 11, wherein the electronic control unit (600) is configured to map the detected position of the first actuator (74) to the first requested torque by accessing a table associated with a currently-activated ride mode of a plurality of ride modes.

13. The system of one of claims 2 to 12, wherein the electronic control unit (600) is configured to map the detected position of the second actuator (72) to the second requested torque based on an equation, the equation including dividing a position of the second actuator (72) by a predetermined maximum position and multiplying a result of the division by a predetermined maximum braking torque.

## Patentansprüche

1. Verfahren zum Betreiben eines Elektromotors (58) eines Fahrzeugs (20), wobei das Verfahren umfasst:
Erfassen (82) einer Position eines ersten in dem Fahrzeug (20) enthaltenen Betätigungselementes (74), wobei das erste Betätigungselement (74) ein Antriebsmoment des Fahrzeugs steuert;
Erfassen (84) einer Position eines zweiten in dem Fahrzeug (20) enthaltenen Betätigungselementes (72), wobei das zweite Betätigungselement (72) eine regenerative Bremskraft eines Rades (22, 24) des Fahrzeugs (20) steuert;
Zuordnen (86) der Position des ersten Betätigungselementes (74) zu einem ersten angeforderten Drehmoment;
Zuordnen (88) der Position des zweiten Betätigungselementes (72) zu einem zweiten angeforderten Drehmoment, wobei das zweite angeforderte Drehmoment auf Basis der Position des zweiten Betätigungselementes als ein Prozentsatz zwischen 0 % und 100 % dargestellt wird;
Bestimmen (94) eines Drehmoment-Befehls auf Basis des ersten angeforderten Drehmomentes und des zweiten angeforderten Drehmomentes durch Multiplizieren des ersten angeforderten Drehmomentes mit dem zweiten angeforderten Drehmoment mittels einer elektronischen Steuerungs-Einheit (600); sowie
Übertragen (96) des Drehmoment-Befehls zu dem in dem Fahrzeug (20) enthaltenen Elektromotor (58) zum regenerativen Bremsen des Rades (22, 24), wobei regeneratives Bremsen, das über den Elektromotor (58) auf Basis des Drehmoment-Befehls bewirkt wird, der einzige für das Rad (22, 24) vorhandene Bremsmechanismus ist.

2. System zum Betreiben eines Elektromotors (58) eines zweirädrigen Fahrzeugs (20), wobei das System umfasst:
wenigstens eine in dem Fahrzeug (20) enthaltene elektronische Steuerungs-Einheit (600), wobei die wenigstens eine elektronische Steuerungs-Einheit (600) ausgeführt ist zum:
Erfassen einer Position eines ersten in dem Fahrzeug (20) enthaltenen Betätigungselementes (74), wobei das erste Betätigungselement (74) ein Antriebsmoment des Fahrzeugs steuert;
Erfassen einer Position eines zweiten in dem Fahrzeug (20) enthaltenen Betätigungselementes (72), wobei das zweite Betätigungselement (72) eine regenerative Bremskraft eines Rades (22, 24) des Fahrzeugs (20) steuert;
Zuordnen der erfassten Position des ersten Betätigungselementes (74) zu einem ersten angeforderten Drehmoment;
Zuordnen der Position des zweiten Betätigungselementes (72) zu einem zweiten angeforderten Drehmoment, wobei das zweite angeforderte Drehmoment auf Basis der Position des zweiten Betätigungselementes als ein Prozentsatz zwischen 0 % und 100 % dargestellt wird;
Bestimmen eines Drehmoment-Befehls auf Basis des ersten angeforderten Drehmomentes und des zweiten angeforderten Drehmomentes durch Multiplizieren des ersten angeforderten Drehmomentes mit dem zweiten angeforderten Drehmoment, sowie
Übertragen des Drehmoment-Befehls zu dem in dem Fahrzeug (20) enthaltenen Elektromotor (58) zum regenerativen Bremsen des Rades (22, 24), wobei regeneratives Bremsen, das über den Elektromotor (58) auf Basis des Drehmoment-Befehls bewirkt wird, der einzige für das Rad (22, 24) vorhandene Bremsmechanismus ist.

3. System nach Anspruch 2, wobei die elektronische Steuerungs-Einheit (600) den Drehmoment-Befehl bestimmt, indem sie das erste angeforderte Drehmoment und das zweite angeforderte Drehmoment addiert.

4. System nach Anspruch 2 oder 3, das des Weiteren umfasst:
den Elektromotor (58);
ein Rad (22, 24), das mit dem elektronischen Motor (58) so gekoppelt ist, dass es angetrieben werden kann, um das Fahrzeug (20) vorwärts zu bewegen;
das erste Betätigungselement (74), wobei das erste Betätigungselement (74) zwischen einer ersten Vielzahl von Positionen bewegt werden kann; und
das zweite Betätigungselement (72), wobei das zweite Betätigungselement (72) zwischen einer zweiten Vielzahl von Positionen bewegt werden kann;
wobei die elektronische Steuerungs-Einheit (600) so ausgeführt ist, dass sie die Position des ersten Betätigungselementes (74) anhand der ersten Vielzahl von Positionen bestimmt und die Position des zweiten Betätigungselementes (72) anhand der zweiten Vielzahl von Positionen bestimmt, und
das erste angeforderte Drehmoment ein angefordertes Antriebsmoment ist und das zweite angeforderte Drehmoment ein angefordertes Bremsmoment ist.

5. System nach Anspruch 4, wobei das Rad (22, 24) ein Hinterrad des Fahrzeugs einschließt.

6. System nach Anspruch 4 oder 5, das des Weiteren einen Stromspeicher (54) umfasst, der dem Elektromotor (58) Strom zuführt, wobei, wenn der Drehmoment-Befehl negativ ist, der Elektromotor (58) das Rad (22, 24) regenerativ bremst, und die während des regenerativen Bremsens gewonnene Energie in dem Stromspeicher (58) gespeichert wird.

7. System nach einem der Ansprüche 2 bis 6, wobei das erste Betätigungselement (74) einen Drehgriff enthält, der an einer Lenkstange (40) des Fahrzeugs (20) positioniert ist und sich auf einer rechten Seite einer Lenkstange (40) des Fahrzeugs (20) befindet.

8. System nach einem der Ansprüche 2 bis 7, wobei das zweite Betätigungselement (72) einen schwenkbaren Hebel enthält, der an einer Lenkstange (40) des Fahrzeugs (20) positioniert ist, und/oder wobei das zweite Betätigungselement (72) ein Fußpedal enthält, und/oder wobei das zweite Betätigungselement (72) an einer linken Seite einer Lenkstange (40) des Fahrzeugs (20) positioniert ist.

9. System nach einem der Ansprüche 2 bis 8, wobei die elektronische Steuerungs-Einheit (600) so ausgeführt ist, dass sie die erfasste Position des ersten Betätigungselementes (74) auf Basis der Position des ersten Betätigungselementes (72) und einer Geschwindigkeit des Fahrzeugs dem ersten angeforderten Drehmoment zuordnet.

10. System nach Anspruch 9, wobei die Geschwindigkeit des Fahrzeugs durch die Umdrehungen je Minute des Elektromotors (58) dargestellt wird.

11. System nach einem der Ansprüche 2 bis 10, wobei die elektronische Steuerungs-Einheit (600) so ausgeführt ist, dass sie die erfasste Position des ersten Betätigungselementes (74) dem ersten angeforderten Drehmoment zuordnet, indem sie auf eine zweidimensionale Tabelle zugreift, die die Position des ersten Betätigungselementes (74) und eine Geschwindigkeit des Fahrzeugs dem angeforderten Antriebsmoment zuordnet.

12. System nach einem der Ansprüche 2 bis 11, wobei die elektronische Steuerungs-Einheit (600) so ausgeführt ist, dass sie die erfasste Position des ersten Betätigungselementes (74) dem ersten angeforderten Drehmoment zuordnet, indem sie auf eine Tabelle zugreift, die mit einem aktuell aktivierten Fahrmodus einer Vielzahl von Fahrmodi verknüpft ist.

13. System nach einem der Ansprüche 2 bis 12, wobei die elektronische Steuerungs-Einheit (600) so ausgeführt ist, dass sie die erfasste Position des zweiten Betätigungselementes (72) auf Basis einer Gleichung dem zweiten angeforderten Drehmoment zuordnet, wobei die Gleichung Dividieren einer Position des zweiten Betätigungselementes (72) durch eine vorgegebene maximale Position und Multiplizieren eines Ergebnisses der Division mit einem vorgegebenen maximalen Bremsmoment einschließt.

## Revendications

1. Procédé de fonctionnement d'un moteur électrique (58) d'un véhicule (20), le procédé comprenant :
détection (82) d'une position d'un premier actionneur (74) inclus dans le véhicule (20), le premier actionneur (74) contrôlant le couple d'entraînement du véhicule ;
détection (84) d'une position d'un deuxième actionneur (72) inclus dans le véhicule (20), le deuxième actionneur (72) contrôlant une force de freinage régénératrice d'une roue (22, 24) du véhicule (20) ;
mappage (86) de la position du premier actionneur (74) sur un premier couple demandé ;
mappage (88) de la position du deuxième actionneur (72) sur un deuxième couple demandé, le deuxième couple demandé représenté en tant que pourcentage entre 0 % et 100 % selon la position du deuxième actionneur ;
détermination (94), avec une unité de commande électronique (600), d'une commande de couple selon le premier couple demandé et le deuxième couple demandé en multipliant le premier couple demandé par le deuxième couple demandé ; et
transmission (96) de la commande de couple au moteur électrique (58) inclus dans le véhicule (20) pour un freinage régénérateur de la roue (22, 24), dans lequel le freinage régénérateur fourni via le moteur électrique (58) selon la commande de couple est le seul mécanisme de freinage fourni pour la roue (22, 24).

2. Système pour un fonctionnement d'un moteur électrique (58) d'un véhicule à deux roues (20), le système comprenant :
au moins une unité de commande électronique (600) incluse dans le véhicule (20), l'au moins une unité de commande électronique (600) configurée pour :
détecter (82) une position d'un premier actionneur (74) inclus dans le véhicule (20), le premier actionneur (74) contrôlant un couple d'entraînement du véhicule,
détecter une position d'un deuxième actionneur (72) inclus dans le véhicule (20), le deuxième actionneur (72) contrôlant une force de freinage régénératrice d'une roue (22, 24) du véhicule (20),
mapper la position détectée du premier actionneur (74) sur un premier couple demandé,
mapper la position du deuxième actionneur (72) sur un deuxième couple demandé, le deuxième couple demandé représenté en tant que pourcentage entre 0 % et 100 % selon la position du deuxième actionneur,
déterminer une commande de couple selon le premier couple demandé et le deuxième couple demandé en multipliant le premier couple demandé par le deuxième couple demandé, et
transmettre la commande de couple au moteur électrique (58) inclus dans le véhicule (20) pour un freinage régénérateur de la roue (22, 24), dans lequel le freinage régénérateur fourni via le moteur électrique (58) selon la commande de couple est le seul mécanisme de freinage fourni pour la roue (22, 24).

3. Le système de la revendication 2, dans lequel l'unité de commande électronique (600) détermine la commande de couple en additionnant le premier couple demandé et le deuxième couple demandé.

4. Le système de la revendication 2 ou 3, comprenant en outre :
le moteur électrique (58) ;
une roue (22, 24) couplé en entraînement au moteur électrique (58) pour propulser le véhicule (20) ;
le premier actionneur (74), dans lequel le premier actionneur (74) est mobile entre une premier pluralité de positions ; et
le deuxième actionneur (72), dans lequel le deuxième actionneur (72) est mobile entre une deuxième pluralité de positions,
dans lequel l'unité de commande électronique (600) est configurée pour déterminer la position du premier actionneur (74) issue de la première pluralité de positions et déterminer la position du deuxième actionneur (72) issue de la deuxième pluralité de positions, et
dans lequel le premier couple demandé est un couple d'entraînement demandé et le deuxième couple demandé est un couple de freinage demandé.

5. Le système de la revendication 4, dans lequel la roue (22, 24) inclut une roue arrière du véhicule.

6. Le système de la revendication 4 ou 5, comprenant en outre un stockage d'énergie électrique (54) alimentant le moteur électrique (58), dans lequel, lorsque la commande de couple est négative, le moteur électrique (58) freine de manière régénératrice la roue (22, 24) et une énergie capturée pendant le freinage régénérateur est stockée dans le stockage d'énergie électrique (58).

7. Le système de l'une des revendications 2 à 6, dans lequel le premier actionneur (74) inclut une poignée tournante positionnée sur le guidon (40) du véhicule (20) positionnée sur un côté droit d'un guidon (40) du véhicule (20).

8. Le système de l'une des revendications 2 à 7, dans lequel le deuxième actionneur (72) inclut un levier pivotable positionné sur le guidon (40) du véhicule (20) et/ou dans lequel le deuxième actionneur (72) inclut une pédale au pied et/ou dans lequel le deuxième actionneur (72) est positionné sur un côté gauche d'un guidon (40) du véhicule (20).

9. Le système de l'une des revendications 2 à 8, dans lequel l'unité de commande électronique (600) est configurée pour mapper la position détectée du premier actionneur (74) sur le premier couple demandé selon la position du premier actionneur (72) et une vitesse du véhicule.

10. Le système de la revendication 9, dans lequel la vitesse du véhicule est représentée par des tours par minute du moteur électrique (58).

11. Le système de l'une des revendications 2 à 10, dans lequel l'unité de commande électronique (600) est configurée pour mapper la position détectée du premier actionneur (74) sur le premier couple demandé en accédant à une table à deux dimensions mappant la position du premier actionneur (74) et une vitesse du véhicule sur le couple d'entraînement demandé.

12. Le système de l'une des revendications 2 à 11, dans lequel l'unité de commande électronique (600) est configurée pour mapper la position détectée du premier actionneur (74) sur le premier couple demandé en accédant à une table associée à un mode de conduite couramment activé d'une pluralité de modes de conduite.

13. Le système de l'une des revendications 2 à 12, dans lequel l'unité de commande électronique (600) est configurée pour mapper la position détectée du deuxième actionneur (72) sur le deuxième couple demandé selon une équation, l'équation incluant une division d'une position du deuxième actionneur (72) par une position maximale prédéterminée et une multiplication d'un résultat de la division par un couple de freinage maximal prédéterminé.
